# EUROPEAN PATENT APPLICATION

(11) **EP 4 586 280 A1**
(43) Date of publication of application: **16.07.2025**
(21) Application number: 23863012.3
(22) Date of filing: 29.08.2023
(51) Int. Cl.: H01B 1/24

(54) **CARBON NANOTUBE DISPERSION AND ELECTRICALLY CONDUCTIVE MATERIAL USING SAME**

(30) Priority: 09.09.2022 JP 2022143887
(71) Applicant: Kusumoto Chemicals, Ltd., Tokyo 101-0047 (JP)
(72) Inventor: AZEYANAGI Norifumi, Soka-shi, Saitama 340-0004 (JP); KADOWAKI Kanji, Soka-shi, Saitama 340-0004 (JP); HORIGUCHI Takashi, Soka-shi, Saitama 340-0004 (JP)
(74) Representative: TBK
(86) International application number: PCT/JP2023/031070
(87) International publication number: WO 2024/053473

(57) **Abstract**

This invention provides a carbon nanotube dispersion capable of achieving high electrical conductivity even with a small amount of carbon nanotube, and an electrically conductive material using the same. A carbon nanotube dispersion of the present invention contains a carbon nanotube, a dispersant, and a binder component. The carbon nanotube is preferably a single-walled carbon nanotube. The binder component is preferably an acrylic resin. An electrically conductive material of the present invention contains a carbon nanotube dispersion described above.

## Description

### TECHNICAL FIELD

This invention relates to a carbon nanotube dispersion and an electrically conductive material using the same.

### BACKGROUND ART

Carbon nanotubes have been reported in a wide variety of research papers on electrical, electronic, chemical, and engineering applications since their discovery due to their unique surface area, aspect ratio, and properties as a conductor, and are known as a material with great industrial promise.

Patent Document 1 discloses a dispersion, which contains a dispersion medium, a metal-containing oxidized cellulose nanofiber containing a metal other than sodium in a salt form, and a single-walled carbon nanotube, as a dispersion capable of producing a composite having high electrical conductivity with a small amount of single-walled carbon nanotube.

### PRIOR ART DOCUMENT

### PATENT DOCUMENT

Patent Document 1: JP 2021-57271 A

### SUMMARY OF THE INVENTION

### PROBLEM TO BE SOLVED BY THE INVENTION

However, even if carbon nanotubes (especially single-walled carbon nanotubes) are uniformly dispersed, the electrical conductivity is not so high. This is thought to be because the amount of carbon nanotube cannot be increased too much due to the dispersibility and cost issues to make it difficult to form electrically conductive paths of the carbon nanotubes connected to each other. In other words, if a structure can be formed in which accumulations obtained by moderately accumulating a plurality of carbon nanotubes are connected to each other, it is thought that electrically conductive paths can be formed and high electrical conductivity can be achieved even with a small amount of carbon nanotube.

An object of the present invention is to provide a carbon nanotube dispersion capable of achieving high electrical conductivity even with a small amount of carbon nanotube, and an electrically conductive material using the same.

### MEANS OF SOLVING THE PROBLEM

A carbon nanotube dispersion of the present invention comprises a carbon nanotube, a dispersant, and a binder component.

An electrically conductive material of the present invention comprises a carbon nanotube dispersion described above.

### EFFECT OF THE INVENTION

According to the present invention, it is possible to provide a carbon nanotube dispersion capable of achieving high electrical conductivity even with a small amount of carbon nanotube, and an electrically conductive material using the same.

### BRIEF DESCRIPTION OF DRAWINGS

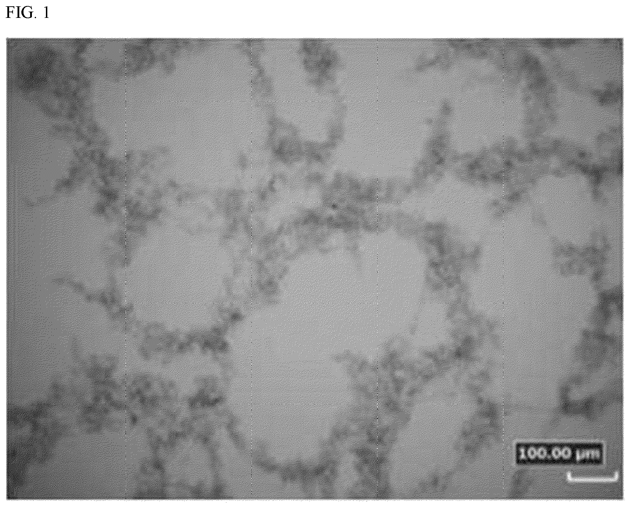

FIG. 1 is a micrograph showing a state of carbon nanotubes structured in a carbon nanotube dispersion of the present invention.

### MODE FOR CARRYING OUT THE INVENTION

A carbon nanotube dispersion of the present invention contains a carbon nanotube, a dispersant, and a binder component. In this carbon nanotube dispersion, as shown in a micrograph of FIG. 1, a structure is formed in which accumulations obtained by accumulating a plurality of carbon nanotubes are connected to each other, so that high conductivity can be obtained even with a small amount of carbon nanotubes.

The carbon nanotube (CNT) has a tubular structure obtained by rounding a flat sheet of carbon (graphene sheet). The carbon nanotube may be a single-walled carbon nanotube (SWCNT), in which one layer of graphene sheet forms a coaxial tube, or may be a multi-walled carbon nanotube (MWCNT), in which two or three layers of graphene sheets form a coaxial tube. Among these, single-walled carbon nanotubes are preferable because high electrical conductivity can be expected even in a small amount. These carbon nanotubes can be used alone or in combination with two or more kinds.

The dispersant is a component for dispersing carbon nanotubes in a binder resin and makes it easier to form a structure in which accumulations obtained by accumulating a plurality of carbon nanotubes are connected to each other. Examples of the dispersant include surfactants such as anionic surfactants, cationic surfactants, nonionic surfactants, and amphoteric surfactants, as well as polymer-type dispersants other than surfactants. These dispersants can be used alone or in combination with two or more kinds.

Examples of the anionic surfactant include carboxylic acid-type anionic surfactants such as aliphatic carboxylic acids, aromatic carboxylic acids, polyether carboxylic acids, and salts of these; sulfonic acid-type anionic surfactants such as aliphatic sulfonic acids, aromatic sulfonic acids, and salts of these; sulfate ester-type anionic surfactants such as alkyl sulfate esters, polyether sulfate esters, sulfated oil esters, and salts of these; and phosphate ester-type anionic surfactants such as alkyl phosphate esters and salts of these, polyether phosphate esters and salts of these, and alkyl polyether phosphate esters and salts of these. Among these, phosphate ester-type anionic surfactants are preferable from the viewpoint of dispersibility of CNTs and compatibility with a binder resin, and polyether phosphate esters or alkyl polyether phosphate esters, or salts of these are more preferable. Examples of the counter ion of the anionic surfactant include alkali metal ions such as lithium ion, sodium ion, and potassium ion; alkaline earth metal ions such as calcium ion, strontium ion, and barium ion. These anionic surfactants can be used alone or in combination with two or more kinds.

Examples of the cationic surfactant include ammonium salt-type cationic surfactants such as alkyl trimethylammonium salts and dialkyl dimethylammonium salts; amine-type cationic surfactants such as alkylamines, dialkylamines, trialkylamines, polyetheramines, and salts of these. Among these, amine-type cationic surfactants are preferable from the viewpoint of dispersibility of CNTs and compatibility with a binder resin, and polyetheramines or salts of these are more preferable. Examples of the counter ion of the cationic surfactant include fluorine ion, chlorine ion, bromine ion, and iodine ion. These cationic surfactants can be used alone or in combination with two or more kinds.

Examples of the nonionic surfactant include ester-type nonionic surfactants such as glycol fatty acid esters, glycerol fatty acid esters, sorbitan fatty acid esters, sucrose fatty acid esters, and polyglycerol fatty acid esters; ether-type nonionic surfactants such as polyoxyalkylene alkyl ethers and polyoxyalkylene alkyl phenyl ethers; ester ether-type nonionic surfactants such as polyoxyalkylene fatty acid esters; and polyalkylene glycol-type nonionic surfactants such as polyoxyalkylene and derivatives of these. Among these, from the viewpoints of dispersibility of CNTs and compatibility with a binder resin, polyalkylene glycol-type nonionic surfactants are preferable, and polyoxyalkylenes is more preferable. Examples of the polyoxyalkylene include polyoxyethylene polyoxypropylene condensates. These nonionic surfactants can be used alone or in combination with two or more kinds.

Examples of the amphoteric surfactants include carboxybetaine-type amphoteric surfactants such as alkyl betaine and aliphatic amide alkyl betaine. These amphoteric surfactants can be used alone or in combination with two or more kinds.

Examples of the polymer-type dispersants that can be used as a dispersant include polyvinyl alcohol and polyvinyl pyrrolidone.

The number average molecular weight (Mn) of a dispersant is preferably 300 to 50000, and is more preferably 500 to 3000 from the viewpoint of compatibility with a binder resin and dispersibility of CNTs.

The binder component is a component for dispersing carbon nanotubes and serves as a matrix to form a structure in which accumulations obtained by accumulating a plurality of carbon nanotubes are connected to each other. Examples of the binder component include binder resins thermosetting resins such as bisphenol A type epoxy resins, bisphenol F type epoxy resins, alicyclic epoxy resins, phenol-formaldehyde resins, melamine resins, unsaturated polyester resins, alkyd resins, silicone resins, polyurethanes, and polyimides; thermoplastic resins such as polyethylenes, polypropylenes, polyolefins, polyvinyl chlorides, polystyrenes, polyvinyl acetates, polyvinyl alcohols, polyvinyl acetals, polyvinyl butyrals, polyurethanes, polytetrafluoroethylenes, polyvinylidene fluorides, acrylonitrile butadiene styrenes, acrylic resins (polyacrylates, polymethacrylates), polyamides, polyacetals, polycarbonates, polyesters, polyphenylene sulfides, polysulfones, polyethersulfones, liquid crystal polymers, polyetheretherketones, thermoplastic polyimides, and polyamideimides; liquid polymers such as silicone oils, polyalkylene glycols, polyglycols, polycarbonate polyols, polyester polyols, and polyether polyols; and elastomers such as silicone resins, unvulcanized rubbers, and thermoplastic elastomers. Among these, acrylic resins (acrylic polymers) are preferable from the viewpoint of compatibility with a dispersant. These binder components can be used alone or in combination with two or more kinds.

Examples of a monomer for forming an acrylic resin include alkyl acrylates such as methyl acrylate, ethyl acrylate, propyl acrylate, isopropyl acrylate, butyl acrylate, isobutyl acrylate, sec-butyl acrylate, t-butyl acrylate, pentyl acrylate, hexyl acrylate, heptyl acrylate, octyl acrylate, and 2-ethylhexyl acrylate; alkyl methacrylates such as methyl methacrylate, ethyl methacrylate, propyl methacrylate, isopropyl methacrylate, butyl methacrylate, isobutyl methacrylate, sec-butyl methacrylate, t-butyl methacrylate, pentyl methacrylate, hexyl methacrylate, heptyl methacrylate, octyl methacrylate, and 2-ethylhexyl methacrylate; nitrile compounds such as acrylonitrile and methacrylonitrile; and acrylic oligomers such as methoxy polyethylene glycol monoacrylates, methoxy polypropylene glycol monoacrylates, methoxy polyethylene glycol monomethacrylates, methoxy polypropylene glycol monomethacrylates, polyoxyalkylene acrylates, and polyoxyalkylene methacrylates. These monomers for forming an acrylic resin can be used alone or in combination with two or more kinds.

The weight average molecular weight (Mw) of a binder component is preferably 1000 to 300000 from the viewpoint of processability in manufacturing of a dispersion, and is more preferably 1000 to 20000.

The solubility parameter (SP) of a binder component is preferably 6 to 12 from the viewpoint of compatibility with a dispersant, and is more preferably 8 to 10. However, it greatly varies depending on the type of the dispersant and the solvent used in combination.

The content percentage of a carbon nanotube in a carbon nanotube dispersion of the present invention can be adjusted as needed to achieve a desired electrical conductivity, but is preferably 0.01 to 20 wt%. If the content percentage of a carbon nanotube is 0.01 wt% or more, high electrical conductivity can be provided. If the content percentage of a carbon nanotube is 20 wt% or less, good dispersibility can be achieved. The content percentage of a carbon nanotube is more preferably 0.1 to 10 wt%, further preferably 0.3 to 5 wt%, and is especially preferably 0.5 to 2 wt%.

The weight ratio of a dispersant to a binder component (dispersant / binder component) in a carbon nanotube dispersion of the present invention can be adjusted as needed to achieve a desired electrical conductivity, but is preferably 1/99 to 99/1. If the weight ratio of a dispersant to a binder component is within the above range, high electrical conductivity can be achieved. The weight ratio of a dispersant to a binder component (dispersant / binder component) is more preferably 3/97 to 90/10, is further preferably 5/95 to 50/50, and is especially preferably 7/93 to 20/80.

A carbon nanotube dispersion of the present invention may contain a solvent. Examples of the solvent include water; aliphatic hydrocarbons such as n-hexane and n-heptane; aromatic hydrocarbons such as toluene, o-xylene, m-xylene, and p-xylene; alcohols such as methyl alcohol, ethyl alcohol, propyl alcohol, and isopropyl alcohol; ketones such as acetone and methyl ethyl ketone; ethers such as diethyl ether and tetrahydrofuran; esters such as ethyl acetate, propyl acetate, butyl acetate, and ethyl propionate; halogenated hydrocarbons such as methylene chloride and chloroform; and glycol ethers such as ethylene glycol n-butyl ether, diethylene glycol n-butyl ether, and propylene glycol monomethyl ether acetate, and derivatives of the glycol ethers. These solvents can be used alone or in combination with two or more kinds.

A carbon nanotube dispersion of the present invention may contain another component except for those listed above, depending on the purpose. Examples of the another component include preservatives, viscosity adjusting agents, surface adjusting agents, antifoaming agents, pH adjusting agents, rust inhibitors, lubricants, anti-aging agents, antibacterial agents, flame retardants, UV absorbers, mold release agents, antistatic agents, dyes, pigments, inorganic fine particles other than carbon nanotubes, and organic fine particles. These components can be used alone or in combination with two or more kinds.

A carbon nanotube dispersion of the present invention can be produced by mixing a carbon nanotube, a dispersant, and a binder component. These three components may be mixed by one step or by a plurality of steps, taking into consideration the processability of the raw materials and the dispersibility of the carbon nanotube. When mixing a solvent and another component, the timing is arbitrary. As a stirrer for mixing, for example, a high-speed agitator, a homogenizer, a planetary mixer, a self-rotating mixer, a roll mill, a wet mill, a colloid mill, a bead mill, an attritor, a ball mill, an ultrasonic dispersion machine, a high-pressure dispersion machine, a static mixer, a kneader, a Bunbury mixer, or an extruder can be used.

The carbon nanotube dispersion as described above can provide high electrical conductivity even with a small amount of carbon nanotube, so the carbon nanotube dispersion can be made into an electrically conductive material containing the carbon nanotube dispersion. Examples of the electrically conductive material include functional materials such as electrically conductive additives, antistatic agents, and electromagnetic shielding agents, and examples of the application of the electrically conductive material include battery materials, electronic component materials, paint materials, and ink materials.

### EXAMPLES

### <Example 1>

A carbon nanotube dispersion was prepared by mixing 1 part by weight of a single-walled carbon nanotube (SWCNT, made by OCSiAl, trade name: TUBALL 01RW03), 4 parts by weight of a polyether phosphate ester (PEP, Mn = 2000, HLB = 2) as a dispersant, and 95 part by weight of an acrylic resin (poly(butyl acrylate / isobutyl acrylate), PBA/PIBA, Mw = 16,000, SP = 8.9) as a binder component.

To a mixture of 90 parts by weight of an acrylic resin (made by DIC, trade name: Acridic WL-421) with a resin solid of 50 wt% and 10 parts by weight of butyl acetate was added 1.26 parts by weight of a carbon nanotube dispersion, and the resultant mixture was stirred and mixed using a dissolver with a 40 mm blade under the condition of 2500 rpm and 10 min to obtain a carbon nanotube dispersion. The carbon nanotube dispersion obtained was diluted by adding butyl acetate so that the viscosity by a B-type viscometer at 60 rpm (measurement temperature: 25°C) was approximately 700 mPa·s. The viscosities at 60 rpm and 6 rpm (measurement temperature: 25°C) of the carbon nanotube diluted dispersion solution obtained were measured, and the thixotropic index (T. I. value, viscosity at 6 rpm / viscosity at 60 rpm) was calculated. Furthermore, the surface resistivity of a coating film obtained by applying the carbon nanotube diluted dispersion solution onto a glass plate using a 100 µm applicator and by drying it naturally was measured using a surface resistivity meter (made by Simco Japan, trade name: Worksurface Tester ST-4). The evaluation results (T. I. value and surface resistivity) are shown in TABLE 1.

### <Examples 2 to 8, Comparative Examples 1 to 3>

Carbon nanotube dispersions were prepared and evaluated in the same manner as in Example 1, except that the weight ratio of each component was changed as shown in TABLE 1. The weight ratio of each component and the evaluation results are shown in TABLE 1.

**TABLE 1**

| | weight ratio of each component | | | evaluation | |
|---|---|---|---|---|---|
| | SWCNT | PEP | PBA/PIBA | T.I. value | surface resistivity [Ω/□] |
| Ex. 1 | 1 | 4 | 95 | 1.1 | 10^{10.7} |
| Ex. 2 | 1 | 9 | 90 | 1.3 | 10^{7.3} |
| Ex. 3 | 1 | 19 | 80 | 1.3 | 10^{7.2} |
| Ex. 4 | 1 | 29 | 70 | 1.2 | 10^{8.1} |
| Ex. 5 | 1 | 39 | 60 | 1.2 | 10^{8.2} |
| Ex. 6 | 1 | 49 | 50 | 1.2 | 10^{8.0} |
| Ex. 7 | 1 | 79 | 20 | 1.1 | 10^{8.6} |
| Ex. 8 | 1 | 89 | 10 | 1.0 | 10^{9.1} |
| Comp. Ex. 1 | 1 | 0 | 99 | 1.3 | > 10¹³ |
| Comp. Ex. 2 | 1 | 99 | 0 | 1.4 | 10^{11.3} |
| Comp. Ex. 3 | 0 | 0 | 100 | 0.9 | > 10¹³ |

As described above, it has been found that electrical conductivity can not be improved so much in Comparative Examples 1 to 2, in which 1 part by weight of a single-wall carbon nanotube was compounded into a dispersant or a binder component, compared to Comparative Example 3, in which no single-wall carbon nanotube was used. However, it has been found that high electrical conductivity can be achieved in Examples 1 to 8 in which a dispersant and a binder component were used together.

### <Examples 9 to 16>

Carbon nanotube dispersions were prepared and evaluated in the same manner as in Example 3, except that, as a binder component, a poly(2-ethylhexyl acrylate) (PEHA) was used in Example 9, a poly(butyl acrylate-isobutyl acrylate) (PBA/PIBA) was used in Example 10, a poly(butyl acrylate) (PBA) was used in Examples 11 and 12, a poly(ethyl acrylate-butyl acrylate) (PEA/PBA) was used in Example 13, a poly(2-ethylhexyl acrylate-methoxy polyethylene glycol monoacrylate (PEHA/PMOPEGA) in Example 14, and a poly(butyl acrylate-methoxy polyethylene glycol monoacrylate) (PBA/PMOPEGA) was used in Examples 15 and 16. The properties (Mw, SP) of each acrylic resin and evaluation results are shown in TABLE 2.

**TABLE 2**

| | acrylic resin | | | evaluation | |
|---|---|---|---|---|---|
| | abbreviation | Mw | SP | T.I. value | surface resistivity [Ω/□] |
| Ex. 3 | PBA/PIBA | 16000 | 8.9 | 1.3 | 10^{7.2} |
| Ex. 9 | PEHA | 11000 | 8.2 | 1.3 | 10^{8.2} |
| Ex. 10 | PBA/PIBA | 6000 | 8.9 | 1.4 | 10^{7.4} |
| Ex. 11 | PBA | 2000 | 9.0 | 1.6 | 10^{8.7} |
| Ex. 12 | PBA | 18000 | 9.0 | 1.7 | 10^{7.1} |
| Ex. 13 | PEA/PBA | 16000 | 9.4 | 1.6 | 10^{7.0} |
| Ex. 14 | PEHA/PMOPEGA | 12000 | 10.7 | 1.4 | 10^{8.3} |
| Ex. 15 | PBA/PMOPEGA | 12000 | 10.6 | 1.6 | 10^{8.2} |
| Ex. 16 | PBA/PMOPEGA | 12000 | 10.4 | 1.5 | 10^{8.3} |

As shown above, it has been found that high electrical conductivity can be achieved regardless of the kind of acrylic resin used as a binder component.

### <Examples 17 to 23>

Carbon nanotube dispersions were prepared and evaluated in the same manner as in Example 10, except that, as a dispersant, a polyoxyethylene polyoxypropylene condensate (POEPOP, Mn=2000) was used in Example 17, a polypropylene glycol (PPG) was used in Example 18, a sorbitan trioleate (TOS) was used in Example 19, a polyoxyethylene sorbitan trioleate (TOPOES) was used in Example 20, an alkyl polyether phosphate ester (APEP) was used in Example 21, an alkyl polyether carboxylic acid (APEC) was used in Example 22, and a polyoxyalkylene amine (POAA) was used in Example 23. The properties (Mn) of each dispersion and evaluation results are shown in TABLE 3.

**TABLE 3**

| | dispersant | | evaluation | |
|---|---|---|---|---|
| | abbreviation | Mn | T.I. value | surface resistivity [Ω/□] |
| Ex. 10 | PEP | 2000 | 1.4 | 10^{7.4} |
| Ex. 17 | POEPOP | 2000 | 1.3 | 10^{8.3} |
| Ex. 18 | PPG | 2000 | 1.4 | 10^{8.1} |
| Ex. 19 | TOS | 1000 | 1.2 | 10^{8.6} |
| Ex. 20 | TOPOES | 2000 | 1.2 | 10^{8.0} |
| Ex. 21 | APEP | 500 | 1.6 | 10^{7.8} |
| Ex. 22 | APEC | 500 | 1.3 | 10^{8.0} |
| Ex. 23 | POAA | 2000 | 1.3 | 10^{8.3} |

As shown above, it has been found that high electrical conductivity can be achieved regardless of the kind of dispersant.

### <Examples 24 to 26>

Carbon nanotube dispersions were prepared and evaluated in the same manner as in Example 21, except that the weight ratio of each component was changed as shown in TABLE 4. The weight ratio of each component and the evaluation results are shown in TABLE 4.

**TABLE 4**

| | weight ratio of each component | | | evaluation | |
|---|---|---|---|---|---|
| | SWCNT | APEP | PBA/PIBA | T.I. value | surface resistivity [Ω/□] |
| Ex. 24 | 1 | 9 | 90 | 1.4 | 10^{8.6} |
| Ex. 21 | 1 | 19 | 80 | 1.6 | 10^{7.8} |
| Ex. 25 | 1 | 49 | 50 | 1.4 | 10^{7.5} |
| Ex. 26 | 1 | 89 | 10 | 1.2 | 10^{9.7} |

As shown above, it has been found that high electrical conductivity can be achieved by combining a dispersant (an alkyl polyether phosphate ester (APEP)) and a binder component.

This specification discloses at least the following inventions.
[1] A carbon nanotube dispersion, comprising a carbon nanotube, a dispersant, and a binder component.
[2] The carbon nanotube dispersion according to [1], wherein the dispersant is an anionic surfactant.
[3] The carbon nanotube dispersion according to [2], wherein the anionic surfactant is a polyether phosphate ester or an alkyl polyether phosphate ester, or a salt thereof.
[4] The carbon nanotube dispersion according to [1], wherein the dispersant is a cationic surfactant.
[5] The carbon nanotube dispersion according to [4], wherein the cationic surfactant is a polyetheramine or a salt thereof.
[6] The carbon nanotube dispersion according to [1], wherein the dispersant is a nonionic surfactant.
[7] The carbon nanotube dispersion according to [6], wherein the nonionic surfactant is a polyoxyalkylene.
[8] The carbon nanotube dispersion according to any one of [1] to [7], wherein the binder component is an acrylic resin.
[9] The carbon nanotube dispersion according to any one of [1] to [7], wherein the binder component is an epoxy resin.
[10] The carbon nanotube dispersion according to any one of [1] to [7], wherein the binder component is a polyvinyl ether.
[11] The carbon nanotube dispersion according to any one of [1] to [10], wherein the carbon nanotube is a single-walled carbon nanotube.
[12] The carbon nanotube dispersion according to any one of [1] to [11], wherein a content percentage of the carbon nanotube is 0.01 to 20 wt%.
[13] The carbon nanotube dispersion according to any one of [1] to [12], wherein a weight ratio of the dispersant to the binder component (dispersant / binder component) is 1/99 to 99/1.
[14] An electrically conductive material, comprising a carbon nanotube dispersion according to any one of [1] to [13].

## Claims

1. A carbon nanotube dispersion, comprising a carbon nanotube, a dispersant, and a binder component.

2. The carbon nanotube dispersion according to claim 1, wherein the dispersant is an anionic surfactant.

3. The carbon nanotube dispersion according to claim 2, wherein the anionic surfactant is a polyether phosphate ester or an alkyl polyether phosphate ester, or a salt thereof.

4. The carbon nanotube dispersion according to claim 1, wherein the dispersant is a cationic surfactant.

5. The carbon nanotube dispersion according to claim 4, wherein the cationic surfactant is a polyetheramine or a salt thereof.

6. The carbon nanotube dispersion according to claim 1, wherein the dispersant is a nonionic surfactant.

7. The carbon nanotube dispersion according to claim 6, wherein the nonionic surfactant is a polyoxyalkylene.

8. The carbon nanotube dispersion according to claim 1, wherein the binder component is an acrylic resin.

9. The carbon nanotube dispersion according to claim 1, wherein the binder component is an epoxy resin.

10. The carbon nanotube dispersion according to claim 1, wherein the binder component is a polyvinyl ether.

11. The carbon nanotube dispersion according to claim 1, wherein the carbon nanotube is a single-walled carbon nanotube.

12. The carbon nanotube dispersion according to claim 1, wherein a content percentage of the carbon nanotube is 0.01 to 20 wt%.

13. The carbon nanotube dispersion according to claim 1, wherein a weight ratio of the dispersant to the binder component (dispersant / binder component) is 1/99 to 99/1.

14. An electrically conductive material, comprising a carbon nanotube dispersion according to any one of claims 1 to 13.
